# EUROPEAN PATENT APPLICATION

(11) **EP 3 183 951 A1**
(43) Date of publication of application: **28.06.2017**
(21) Application number: 16205626.1
(22) Date of filing: 21.12.2016
(51) Int. Cl.: A01G 3/025

(54) **A HAND-HELD CUTTING DEVICE**

(30) Priority: 22.12.2015 FI 20155996
(71) Applicant: Fiskars Finland Oy Ab, 00560 Helsinki (FI)
(72) Inventor: Heine, Mikko, 00560 Helsinki (FI); Masalin, Petteri, 00560 Helsinki (FI); Vänttilä, Olli-Pekka, 00560 Helsinki (FI); Sandelin, Teemu, 00560 Helsinki (FI); Sokka, Mika, 00560 Helsinki (FI)
(74) Representative: Kolster Oy Ab

(57) **Abstract**

The invention relates to a hand-held cutting device (1), in particular a pruning device, comprising a cutting head (C), which cutting head (C) comprises a first cutting blade (2) and a second cutting blade (3), wherein the cutting blades (2,3) are operable to move apart from each other such that a cutting gap (4) is opened between them, and towards each other such that the cutting gap (4) is closed. One (2) of the cutting blades (2,3) is provided with a guide extension (5) for guiding the object to be cut into the cutting gap (4).

## Description

### FIELD OF THE INVENTION

The invention relates to a hand-held cutting device, in particular a pruning device, which is suitable for cutting twigs or the like.

### BACKGROUND OF THE INVENTION

There are such hand-held cutting devices for cutting twigs or the like which comprise a cutting head provided on an end of an elongated stick. Such cutting device can comprise cutting blades that are operable to move apart from each other such that a cutting gap is opened between them, and back towards each other such that the cutting gap is closed for thereby cutting with the cutting blades an object placed in the cutting gap, such as a twig of a tree to be pruned.

A drawback of the known solutions has been that they are slow to bring to the situation where the object to be cut is correctly positioned between the blades. This is largely due to the length of the device. The longer the device is, the more difficult it is to maneuver such that the cutting head is correctly positioned. A further drawback is that the cutting head gets often hidden behind the leaves of twigs of the plant to be pruned such that it cannot be well seen. This causes small delays and inconvenience in the positioning of the device prior every cut.

### BRIEF DESCRIPTION OF THE INVENTION

The object of the invention is to introduce a handheld cutting device, which is improved in terms of easiness of bringing the cutting blades thereof to be placed around a twig or the like object to be cut. An object is to introduce a solution by which one or more of the above defined problems of prior art and/or problems discussed or implied elsewhere in the description can be solved. An object is particularly to introduce a solution by which operation of a long cutting device can be improved. Embodiments are presented, inter alia, which provide that with a movement of the cutting head in cross direction of its cutting gap, a twig or the like object to be cut can be caught such that thereafter the twig or the like object can be simply slid into the cutting gap.

It is brought forward a new hand-held cutting device, in particular a pruning device which is suitable for cutting twigs or the like, comprising a cutting head, provided on an end of an elongated stick, comprising a first cutting blade and a second cutting blade; wherein the cutting blades are operable to move, e.g. by pivoting, apart from each other such that a cutting gap is opened between them, and towards each other such that the cutting gap is closed for thereby cutting with the cutting blades an object placed in the cutting gap. One of the cutting blades is provided with a guide extension for guiding the object to be cut into the cutting gap. With this solution one or more of the above mentioned objects are achieved. Preferable further details are introduced in the following, which further details can be combined with the cutting device above mentioned individually or in any combination. It may be advantageous to utilize an individual feature or several features so as to achieve advantages related to said individual feature or said several features.

In a preferred embodiment, the guide extension projects a substantial distance further than said cutting blade in longitudinal direction of said cutting blade. Said distance is preferably at least 1.5 cm, but more preferably at least 2 cm or even more.

In a preferred embodiment, each of the cutting blades comprises a tip and the guide extension projects on the frontside of the tipline of the cutting blades, wherein the tipline is a straight line extending via the tips of the cutting blades.

In a preferred embodiment, the guide extension forms the part of the cutting head that projects furthermost on the frontside of the tipline, wherein the tipline is a straight line extending via the tips of the cutting blades.

In a preferred embodiment, the guide extension comprises a guide edge along which an object to be cut can slide into the cutting gap. The guide edge is preferably smooth for enabling unobstructed sliding of the object to be cut along it.

In a preferred embodiment, the cutting blade comprises a cutting edge, and the guide extension comprises a guide edge steplessly aligned with the cutting edge, when viewed in direction of the pivot axis around which the blades are pivotable relative to each other.

In a preferred embodiment, the guide edge continues from the cutting edge in longitudinal direction of said cutting blade.

In a preferred embodiment, the cutting blade comprises a cutting edge, and the guide extension comprises a guide edge, and the guide edge and the cutting edge together form a continuous guide track, in particular for an object to be cut to slide along.

In a preferred embodiment, the guide extension and said one of the cutting blades are in fixed connection with each other.

In a preferred embodiment, the guide extension is a separate (i.e. discrete) component from the cutting blades. Thus, it can be made of different material with different material properties such as hardness, and with different optical properties, such as to be of different color so that it can be differentiated from the blades but also independently colored to differ from color of the plant to be pruned.

In a preferred embodiment, the guide extension is made of plastic.

In a preferred embodiment, the guide extension (5) is orange or red or white or yellow. Thus, it is easy to see and differentiate from parts of the plant to be pruned.

In a preferred embodiment, the cutting blades are made of metal, preferably of stainless steel.

In a preferred embodiment, the guide extension comprises a guide edge curved towards the center of the cutting gap. Thus, the guide extension is shaped claw-like, and it can catch and hold a twig or the like object to be cut effectively.

In a preferred embodiment, the cutting device is elongated, and has preferably length more than 30 cm, more preferably more than 1 m, most preferably 2m-5m.

In a preferred embodiment, the cutting device further comprises operating mechanism for operating the cutting blades. Preferably, the operating mechanism comprises a handle operable by the user to produce a drive force for operating the cutting blades to move relative to each other, in particular as defined earlier above. Preferably, the operating mechanism comprises a force transmission mechanism connected with the handle and a movable cutting blade for transmitting drive force from the handle to the blade.

In a preferred embodiment, the cutting head is provided on one end of an elongated stick and the operating handle is provided at a distance from the cutting head. Preferably, the distance is more than half of the length of the cutting device. Preferably, the handle is suitable for being grasped by a user during operation of the cutting device. Preferably, the transmission mechanism comprises one or more elongated transmission members, such as a cable or a chain or a rod or a combination of transmission members including one or more of these.

In a preferred embodiment, the cutting head comprises a returning spring arranged to urge the cutting head towards open state wherein the cutting gap is open.

In a preferred embodiment, the cutting blades are pivotally connected.

In a preferred embodiment, the guide extension is supported against the cutting blade, in particular against the side of the cutting blade facing in direction of pivot axis.

In a preferred embodiment, each of the cutting blades comprises a cutting edge, and the guide extension is in direction of pivot axis (displaced from the cutting edges of the cutting blades. Thereby it does not participate in the cutting, nor disturb the cutting. Thus, it can also extend beside the blade such that a stepless alignment is established without disturbing the cutting.

In a preferred embodiment, the cutting blades are scissor type cutting blades. Preferably, the cutting blades are movable towards each other to meet and move further into at least partially overlapped configuration as seen in direction of the pivot axis.

In a preferred embodiment, the cutting blades can pivot relative to each other on planes that are parallel but offset in direction of the pivot axis.

In a preferred embodiment, the cutting blades are movable relative to each other by pivoting around a pivot axis, and said guide extension and the other of the cutting blades are positioned on opposite sides of said one of the cutting blades.

In a preferred embodiment, the cutting blades include a movable cutting blade and a stationary cutting blade, and said guide extension is provided on the stationary cutting blade. Preferably, the movable blade is mounted movably on the cutting head, and the stationary blade is immovably mounted on the cutting head. Thus, the supporting structures of the guide extension do not yield when it is laid to rest on a twig to be cut. The cutting device can thus be pushed such that the twig slides along the guide extension without considerable deformation of the cutting head components whereby the operation can be performed in a controlled manner.

In a preferred embodiment, each of the cutting blades comprises a tip and a mouth leading to the cutting gap is opened between the tips when the blades are moved apart.

In a preferred embodiment, the cutting device is elongated, and has length more than 1 m, and the cutting blades are made of metal, and the guide extension is made of plastic, and the guide extension is orange or red or white or yellow. This provides that the most relevant parts of the device can reach deep into the plant, while being easy to handle and position, as well as see and differentiate from parts of the plant to be pruned, such as twigs and leaves. The guide member being of particularly plastic enables simple manufacturing thereof, such that the whole structure thereof is colorful with optical contrast relative to the plant, yet without increasing much weight to the head of the long device. Preferably, the cutting device has length 2 m - 5 m. With a long device, the advantages achieved with the guide extension are particularly considerable.

### BRIEF DESCRIPTION OF THE DRAWINGS

In the following, the present invention will be described in more detail by way of example and with reference to the attached drawings, in which
Figure 1 illustrates three-dimensionally an embodiment of a hand-held cutting device according to the invention.
Figure 2 illustrates three-dimensionally details of the cutting head of the cutting device of Figure 1.
Figure 3 illustrates three-dimensionally details of the cutting head of the cutting device of Figure 1.
Figure 4 illustrates three-dimensionally details of the cutting head of the cutting device of Figure 1.

The foregoing aspects, features and advantages of the invention will be apparent from the drawings and the detailed description related thereto.

### DETAILED DESCRIPTION

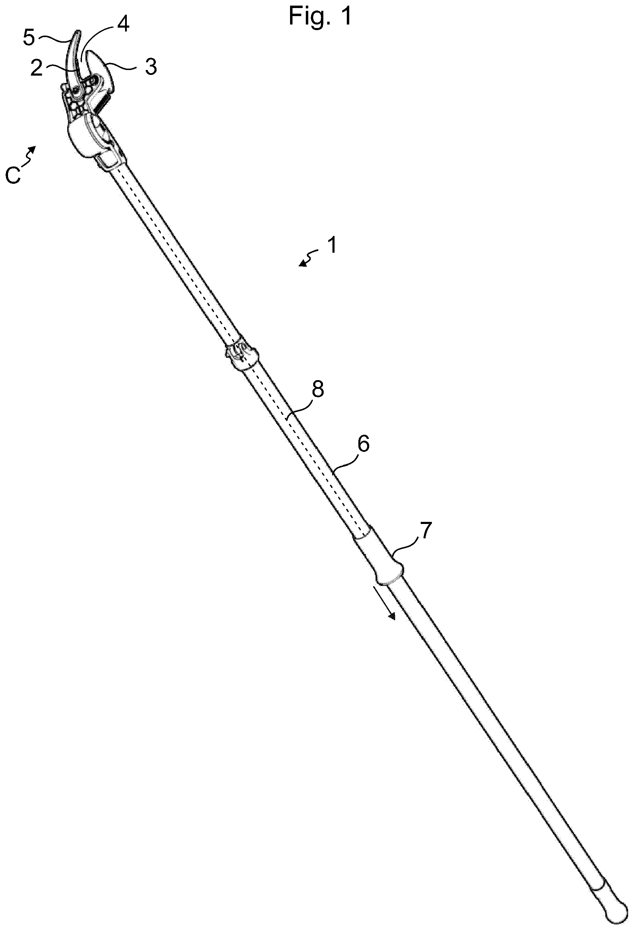

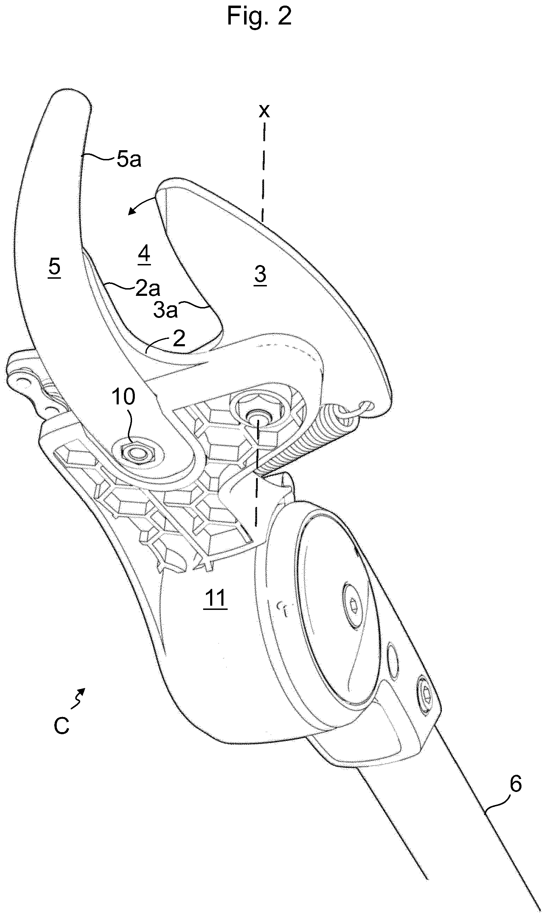

Figure 1 illustrates an embodiment of a hand-held cutting device 1 suitable for cutting twigs or the like. The cutting device is in this case particularly a pruning device. Figures 2 to 4 illustrate preferred details for the cutting device 1. The cutting device comprises a cutting head C provided on an end of an elongated stick 6, which cutting head C comprises a first cutting blade 2 and a second cutting blade 3, which first and second cutting blade 2,3 are operable to move back and forth, in the present case by pivoting. The first and second cutting blade 2,3 are particularly operable, by producing movement on at least one of them, to move apart from each other such that a cutting gap 4 is opened between them, and towards each other such that the cutting gap 4 is closed, for thereby cutting with the cutting blades 2,3 an object placed in the cutting gap 4. For the cutting action, relative movement of the cutting blades 2,3 is important. Therefore, said operation can be implemented by producing movement on only one of the blades 2,3, which is the case in the presented embodiment, but alternatively both of the blades could be made to move during the operation. In the presented embodiment, one of the cutting blades 2,3 is provided with a guide extension 5 for guiding the object to be cut into the cutting gap 4. Said one blade is the first blade 2 in Figure 1. Owing to the guide extension 5, the object to be cut, such as a twig, can be caught swiftly to an advantageous position for the following cutting. The cutting device 1 can be placed such that the guide extension 5 rests against the object to be cut, such as a twig, and thereafter moved such that the object to be cut is guided by the guide extension 5 into the cutting gap 4. Thus, it is made simple and easy to bring the cutting blades 2,3 to be placed around a twig or the like object to be cut. This is advantageous specifically in solutions where the blades 2,3 of the cutting device are not long and/or the cutting gap 4 does not open very wide. This is advantageous specifically in solutions where the cutting device is long and difficult to maneuver accurately.

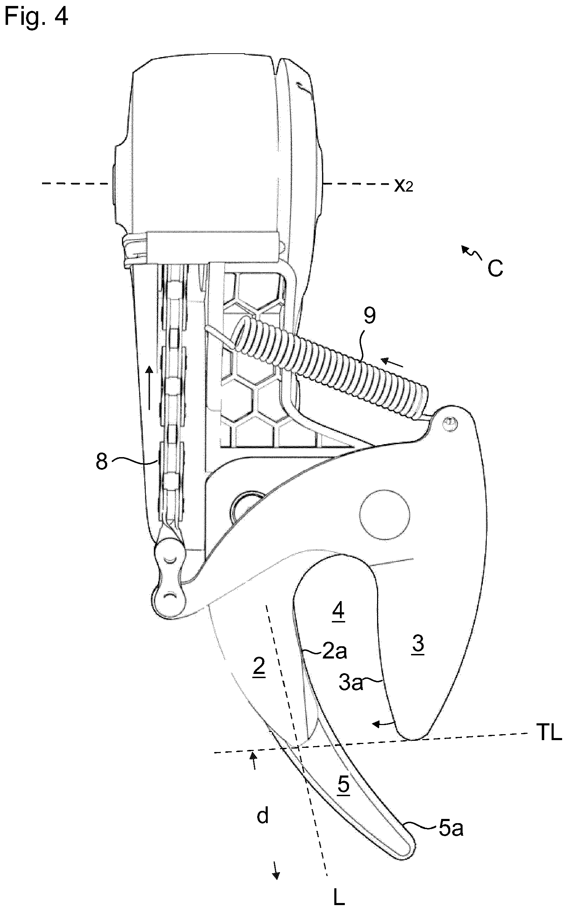

In the presented embodiment, each of the cutting blades 2, 3 comprises a tip and the guide extension 5 projects on the frontside of the tipline TL of the cutting blades 2, 3, wherein the tipline TL is a straight line extending via the tips of the blades 2,3. The tipline is illustrated in Figure 4. In the presented embodiment, only one of the blades 2,3 is provided with a guide extension 5. The guide extension thereby forms the part of the cutting head C that projects furthermost on the frontside of the tipline TL. This makes it possible that with a movement of the cutting head C in cross direction of the cutting gap 4 a twig can be brought straight on the guide extension 5, while without the extension the twig would likely pass by the tips of the cutting blades 2,3 and the cutting gap 4. Without the guide extension, it would be difficult to bring the twig (or any other object) to the cutting gap by any other movement that an accurately aimed movement of the cutting head frontwards. This requires accuracy in positioning prior said movement frontwards, which is particularly difficult when the cutting device is long and/or hidden inside a plant.

In the presented embodiment, the cutting blade 2 has a longitudinal direction and the tip of the cutting blade 2 points in the longitudinal direction L. The guide extension 5 projects a substantial distance d further than said cutting blade 2 in longitudinal direction L of said cutting blade 2. Said distance d is preferably at least 1.5 cm, but more preferably at least 2 cm or even more, such as more than 3 cm.

In the presented embodiment, the cutting blades are pivotally connected. The first cutting blade 2 comprises a cutting edge 2a, and the guide extension 5 provided thereon comprises a guide edge 5a steplessly aligned with the cutting edge 2a when viewed in direction of the pivot axis x. This is visible in Figure 4 illustrating the cutting head in the direction of the pivot axis x. The guide edge 5a continues from the cutting edge 2a in longitudinal direction L of said cutting blade 2 on the fronside of the tipline TL of the cutting blades 2,3. The guide edge 5a and the cutting edge 2a together form a continuous guide track along which an object to be cut can slide. The guide edge 5a is preferably smooth for enabling unobstructed sliding.

In the presented embodiment, the cutting blades 2, 3 are scissor-type cutting blades. The cutting blades 2, 3 are movable towards each other to meet, in particular such that their cutting edges 2a,3a meet, and further such that the cutting edges 2a,3a pass each other into at least partially overlapped configuration as seen in direction of the pivot axis x. In the presented case, the cutting blades 2,3 pivot on planes that are parallel but offset in direction of the pivot axis x.

Basically, it is possible to make both the cutting blades movable. However, this is not preferable, because making one of the blades stationary makes the device easier to aim and lean against an object to be cut. In the presented embodiment, the cutting blades 2,3 include a movable cutting blade 3 and a stationary cutting blade 2, and said guide extension 5 is provided on the stationary cutting blade 2. The movable blade 3 is mounted movably on a body 11 of the cutting head C, and the stationary blade is immovably mounted on a body 11 of the cutting head. Thus, the supporting structures of the guide extension do not yield when it is laid to lean against a twig to be cut. The cutting device can thus be pushed such that the twig slides along the guide extension without considerable deformation of the cutting head components whereby the operation can be performed in a controlled manner. The guide extension can be mounted with a fixing means 10 directly on the cutting blade 2 and/or on the body 11 of the cutting head C. As visible in Figure 2, the cutting head body 1 preferably comprises a slot accommodating partially the guide extension 5.

The guide extension 5 and said one 2 of the cutting blades 2,3 are in the presented embodiment in fixed connection with each other. Thus, the guide extension 5 does not move too much relative to the cutting blade 2 when it is laid to lean against a twig or the like object to be cut.

The guide extension 5 is preferably a separate component from the cutting blades 2,3, as it is the case in the presented embodiment. Thus, it can be made of different material with different material properties such as hardness, and with different optical properties, such as to be of different color so that it can be differentiated from the blades but also independently colored to differ from color of the plant to be pruned. Thus, it can also be simply replaced or even added to an existing cutting device.

The guide extension 5 is preferably made of plastic. Thus, it is light-weighted and does not add weight too much on the distal end of the device, wherein weight may be critical for the maneuvering of the cutting device 1.

The guide extension 5 is preferably orange or red or white or yellow. Thus, it is easy to see and differentiate from parts of the plant to be pruned.

The cutting blades 2,3 are preferably made of metal, preferably of stainless steel. Thus, they can cut without substantial wear thick twigs or the like.

In the presented embodiment, the guide extension 5 is supported against the cutting blade 2, in particular against at least the side of the cutting blade 2 facing in direction of pivot axis x. Thus, it can be supported simply with a long support area. Thereby the support is firm and the guide extension 5 need not be made from very rigid or heavy material. This is advantageous particularly if plastic is to be used as the material of the guide extension 5.

As mentioned, in the preferred embodiment, the cutting blades 2,3 are movable relative to each other by pivoting around a pivot axis x. Each of the cutting blades 2,3 comprises a cutting edge 2a,3a, and the guide extension 5 is in direction of pivot axis x displaced from the cutting edges 2a,3a of the cutting blades 2,3. Thereby it does not participate in the cutting, nor disturb the cutting. Thus, it can also extend a considerable length beside the cutting blade 2 such that a stepless alignment is established without disturbing the cutting. Said guide extension 5 and the other 3 of the cutting blades 2,3 are positioned on opposite sides of said one 2 of the cutting blades 2,3.

As visible in the drawings, it is preferable that the guide extension 5 comprises a guiding edge 5a curved towards the center of the cutting gap 4. Thus, the twig or the like object to be cut is more likely caught by it. The twigs are thus particularly unlikely to slip and pass over the tip thereof.

The cutting device 1 is elongated whereby it can be used for cutting objects hanging high in the air or deep within a plant. It has preferably length more than 30 cm, more preferably more than 1 m, most preferably 2 m - 5 m. The device presented in Figure 1 is roughly about 2.5 m long. With a long device, the advantages achieved with the guide extension are particularly considerable.

The cutting device 1 further comprises operating mechanism 7,8 for operating the cutting blades. The operating mechanism 7,8 comprises a handle 7 operable by the user to produce a drive force for operating the cutting blades 2,3 to move relative to each other as defined. The handle 7 is suitable for being grasped by a user during operation of the cutting device. In the preferred embodiment, the operating mechanism comprises a force transmission mechanism 8 connected with the handle 7 and with a movable cutting blade 3 for transmitting drive force from the handle 7 to the cutting blade 3.

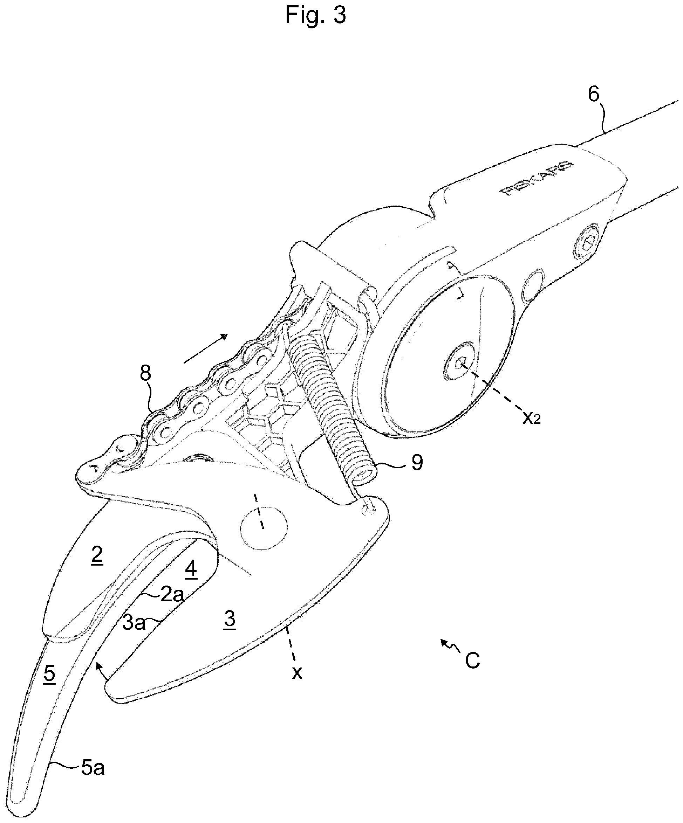

In the presented embodiment, the cutting head C is provided on one end of an elongated stick and the operating handle 7 is provided at a distance from the cutting head C. In the preferred embodiment, the distance is more than half of the length of the cutting device 1. The transmission mechanism 8 preferably comprises one or more elongated transmission members 8 such as a cable or a chain or a rod or a combination of transmission members including one or more of the aforementioned. The cutting head C also preferably, but not necessarily, comprises a returning spring 9 arranged to urge the blades of the cutting head towards open state wherein the cutting gap 4 is open, as visible in Figures 3 and 4. The part of the cutting head C carrying the blades 2,3 may optionally be made to be pivotal relative to the stick 6, whereby the direction towards which the cutting blades point relative to the stick 6, can be adjusted more freely. In figure 4, a pivot axis x2 is visible. The part of the cutting head C carrying the blades 2,3 is pivotal relative to the stick 6 around said pivot axis x2. The cutting head C is preferably lockable by locking means such that the pivotal movement is temporarily blocked.

It is to be understood that the above description and the accompanying Figures are only intended to teach the best way known to the inventors to make and use the invention. It will be apparent to a person skilled in the art that the inventive concept can be implemented in various ways. The above-described embodiments of the invention may thus be modified or varied, without departing from the invention, as appreciated by those skilled in the art in light of the above teachings. It is therefore to be understood that the invention and its embodiments are not limited to the examples described above but may vary within the scope of the claims.

## Claims

1. A hand-held cutting device (1), in particular a pruning device, comprising a cutting head (C), which cutting head (C) comprises a first cutting blade (2) and a second cutting blade (3), wherein the cutting blades (2,3) are operable to move apart from each other such that a cutting gap (4) is opened between them, and towards each other such that the cutting gap (4) is closed for thereby cutting with the cutting blades (2,3) an object placed in the cutting gap, **characterized in that** one (2) of the cutting blades (2,3) is provided with a guide extension (5) for guiding the object to be cut into the cutting gap (4).

2. A hand-held cutting device (1) according to claim 1, **characterized in that** the guide extension (5) projects a distance (d) further than said cutting blade (2) in longitudinal direction (L) of said cutting blade (2), said distance preferably being at least 1.5 cm.

3. A hand-held cutting device (1) according to any of the preceding claims, **characterized in that** each of the cutting blades (2, 3) comprises a tip and the guide extension (5) projects on the frontside of the tipline (TL) of the cutting blades (2, 3), wherein the tipline (TL) is a straight line extending via the tips of the cutting blades (2, 3).

4. A hand-held cutting device (1) according to any of the preceding claims, **characterized in that** the guide extension (5) forms the part of the cutting head (C) that projects furthermost on the frontside of the tipline (TL), wherein the tipline (TL) is a straight line extending via the tips of the cutting blades (2,3).

5. A hand-held cutting device (1) according to any of the preceding claims, **characterized in that** the cutting blade (2) comprises a cutting edge (2a), and the guide extension (5) comprises a guide edge (5a) steplessly aligned with the cutting edge (2a), when viewed in direction of the pivot axis (x) around which the blades (2, 3) are pivotable relative to each other.

6. A hand-held cutting device (1) according to any of the preceding claims, **characterized in that** the cutting blade (2) comprises a cutting edge (2a), and the guide extension (5) comprises a guide edge (5a), and the guide edge (5a) and the cutting edge (2a) together form a continuous guide track.

7. A hand-held cutting device (1) according to any of the preceding claims, **characterized in that** the guide extension (5) and said one (2) of the cutting blades (2,3) are in fixed connection with each other.

8. A hand-held cutting device (1) according to any of the preceding claims, **characterized in that** the guide extension (5) is a separate component from the cutting blades (2, 3).

9. A hand-held cutting device (1) according to any of the preceding claims, **characterized in that** the guide extension (5) is made of plastic.

10. A hand-held cutting device (1) according to any of the preceding claims, **characterized in that** the guide extension (5) is orange or red or white or yellow.

11. A hand-held cutting device (1) according to any of the preceding claims, **characterized in that** the guide extension (5) comprises a guide edge (5a) curved towards the center of the cutting gap (4).

12. A hand-held cutting device (1) according to any of the preceding claims, **characterized in that** the cutting device (1) is elongated, and has preferably length more than 30 cm, more preferably more than 1 m, most preferably 2 m -5m.

13. A hand-held cutting device (1) according to any of the preceding claims, **characterized in that** the cutting device (1) comprises an operating mechanism (7, 8) for operating the cutting blades (2, 3).

14. A hand-held cutting device (1) according to any of the preceding claims, **characterized in that** the cutting blades (2, 3) include a movable cutting blade (3) and a stationary cutting blade (2), and said guide extension (5) is provided on the stationary cutting blade (2).

15. A hand-held cutting device (1) according to any of the preceding claims, **characterized in that** the cutting device (1) is elongated, and has length more than 1 m, and the cutting blades (2,3) are made of metal, and the guide extension (5) is made of plastic, and the guide extension (5) is orange or red or white or yellow.
